# EUROPÄISCHE PATENTANMELDUNG

(11) **EP 1 157 886 A2**
(43) Veröffentlichungstag der Anmeldung: **28.11.2001**
(21) Anmeldenummer: 01112224.9
(22) Anmeldetag: 18.05.2001
(51) Int. Cl.: B60Q 1/00

(54) **Fahrzeug**

(30) Priorität: 24.05.2000 US 577098
(71) Anmelder: DEERE & COMPANY, Moline, Illinois 61265-8098 (US)
(72) Erfinder: Goebert, Barry Joseph, Beaver Dam, WI 53916 (US)
(74) Vertreter: Magin, Ludwig Bernhard

(57) **Zusammenfassung**

An Fahrzeugen werden Beleuchtungseinrichtungen bzw. Scheinwerfer in unterschiedlichen Ausführungen eingesetzt. Bekannte Scheinwerfer weisen üblicherweise einen Reflektor, eine Linse und eine Lichtquelle bzw. ein Leuchtmittel auf, das zwischen dem Reflektor und der Linse angeordnet ist. Fahrzeuge wie beispielsweise Automobile und manche konventionelle Rasentraktoren bzw. Fahrzeuge zur Rasen-, Garten bzw. Grundstückspflege weisen Scheinwerfer auf, die eine Beleuchtung eines Bereichs vor dem Fahrzeug erzeugen. Die Richtung der Beleuchtung durch diese vorderen Scheinwerfer ist in der Art festgelegt, dass der Hauptlichtstrahl direkt vor das Fahrzeug gerichtet ist.

Es wird ein Fahrzeug (10) mit einer Beleuchtungseinrichtung (30) vorgeschlagen, die eine verbesserte Ausleuchtung der Fahrzeugumgebung insbesondere eine Ausleuchtung von Seitenbereichen des Fahrzeugs (10) ermöglicht.

## Beschreibung

Die Erfindung betrifft ein Fahrzeug mit einer in einem Frontbereich des Fahrzeugs vorgesehenen Beleuchtungseinrichtung mit zumindest zwei Scheinwerfergehäusen, welche bezogen auf eine Längsmittelachse des Fahrzeugs zumindest im wesentlichen gegenüberliegend angeordnet sind und in denen jeweils wenigstens ein Reflektor und ein vor dem Reflektor angeordnetes Leuchtmittel vorgesehen ist, wobei die Reflektoren jeweils wenigstens zwei divergierend angeordnete Wände aufweisen.

An Fahrzeugen werden Beleuchtungseinrichtungen bzw. Scheinwerfer in unterschiedlichen Ausführungen eingesetzt. Bekannte Scheinwerfer weisen üblicherweise einen Reflektor, eine Linse und eine Lichtquelle bzw. ein Leuchtmittel auf, das zwischen dem Reflektor und der Linse angeordnet ist. Fahrzeuge wie beispielsweise Automobile und manche konventionelle Rasentraktoren bzw. Fahrzeuge zur Rasen-, Garten bzw. Grundstückspflege weisen Scheinwerfer auf, die eine Beleuchtung eines Bereichs vor dem Fahrzeug erzeugen. Die Richtung der Beleuchtung durch diese vorderen Scheinwerfer ist in der Art festgelegt, dass der Hauptlichtstrahl direkt vor das Fahrzeug gerichtet ist.

Bei manchen Fahrzeugen kann es wünschenswert sein, dass auch eine weitergehende Beleuchtung um Eckbereiche des Fahrzeugs herum zur Verfügung gestellt wird. Hierbei kann es sich um Fahrzeuge handeln, die nicht die gleichen Eigenschaften wie Automobile aufweisen, wie beispielsweise um Fahrzeuge, die Wendungen auf der Stelle ausführen können. Hier ist das Bedürfnis nach einem ausgedehnteren Lichtstrahl größer, um eine ausreichende Ausleuchtung zu erzielen. Fahrzeuge zur Rasen-, Garten- und Grundstückspflege, wie beispielsweise Rasentraktoren und Aufsitzmäher sind häufig mit Anbaueinrichtungen, wie beispielsweise Mähwerken, ausgestattet, die sich häufig über die Seiten des Fahrzeugs hinaus erstrecken, so dass eine Ausleuchtung des Weges des Anbaugeräts einen breiteren und mehr nach rückwärts gerichteten Lichtstrahl erfordert als die Ausleuchtung des Fahrzeugweges.

Die US-A-5,479,323 zeigt eine Beleuchtungseinrichtung, bei der die Stellung der Scheinwerfer und damit die Richtung des erzeugten Beleuchtungsstrahls in Abhängigkeit von der Stellung eines Lenkrades gesteuert werden kann, so dass insbesondere bei Kurvenfahrten der zu fahrende Weg des Fahrzeugs beleuchtet wird.

Die US-A-5,428,512 zeigt ein Fahrzeug mit zusätzlichen seitlichen Scheinwerfern, so dass auch die Seiten des Fahrzeugs unter bestimmten Bedingungen beleuchtet werden. Ähnliche Einrichtungen sind auch für landwirtschaftliche Erntemaschinen, wie beispielsweise Mähdrescher, bekannt, um einen Einsatz während der Nacht zu ermöglichen.

Das der Erfindung zugrunde liegende Problem wird darin gesehen, dass solche Beleuchtungseinrichtungen aufwendig sind und das elektrische System des Fahrzeugs unverhältnismäßig stark belasten.

Dieses Problem wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind.

Auf diese Weise wird eine Beleuchtungseinrichtung zur Verfügung gestellt, die sowohl einen vor einem Fahrzeug gelegenen Bereich als auch Bereiche an dessen Seiten ausleuchtet. Die Beleuchtungseinrichtung weist zwei Scheinwerfergehäuse auf, welche vorzugsweise an gegenüberliegenden Frontbereichen eines Fahrzeugs angeordnet sind. In jedem Scheinwerfergehäuse ist wenigstens ein Reflektor sowie ein Leuchtmittel angeordnet. Der Reflektor weist divergierende Wände auf bzw. wird durch divergierende Wände des Scheinwerfergehäuses gebildet, wobei eine erste Wand sich nach vorn und innen (in Richtung einer Längsmittelachse des Fahrzeugs) und eine zweite Wand nach außen und rückwärts erstreckt. Die Leuchtmittel und Reflektoren auf jeder Seite wirken derart zusammen, dass sich die von ihnen ausgehenden Lichtstrahlen im Bereich der Längsmittelachse des Fahrzeugs überlappen und sich darüber hinaus nach rückwärts erstrecken, so dass ein Ausleuchtungsbereich über mehr als 180° in einem Frontbereich des Fahrzeugs erzielt wird.

Die Beleuchtungseinrichtung bzw. die Scheinwerfergehäuse können an dem Fahrzeug vorgesehen sein. In einfacher Weise sind sie aber an einer üblicherweise in einem Frontbereich des Fahrzeugs vorgesehenen Abdeckung angebracht bzw. in eine solche integral eingeformt. Ein Einformen bietet sich insbesondere an, wenn die Abdeckung aus Kunststoff hergestellt wird und die Gehäuse direkt in die Form eingebracht werden können. Es ist aber auch eine Herstellung einer solchen Abdeckung aus anderen Materialien, wie beispielsweise aus Metall, denkbar. Eine solche Abdeckung kann beispielsweise einen Antrieb des Fahrzeugs ganz oder teilweise umschließen; es können aber auch weitere Bauteile des Fahrzeugs wie beispielsweise eine Batterie, Leitungen etc. unterhalb bzw. innerhalb der Abdeckung, die auch als Fahrzeughaube bezeichnet werden kann, angeordnet sein.

Es ist denkbar, dass die Scheinwerfergehäuse in Richtung der Fahrzeugfront bzw. des jeweiligen Seitenbereichs zum Lichtaustritt zumindest teilweise geöffnet sind. Es ist aber auch eine lichtdurchlässige Ausführung vorstellbar.

Zum Schutz des Leuchtmittels oder auch zu einer weiteren Bündelung oder auch Streuung des Lichts kann wenigstens eine Abdecklinse vorgesehen sein, die derart mit dem Scheinwerfergehäuse verbunden ist, dass das Leuchtmittel zwischen dem Reflektor und der Abdecklinse angeordnet wird. Darüber hinaus ergibt sich durch den Einsatz einer oder mehrerer Abdecklinsen eine zumindest im wesentlichen geschlossene Front, die einen ästhetischen Allgemeineindruck unterstützt. Auch eine Einfärbung der Linsen zur Erzeugung einer farbigen Beleuchtung, beispielsweise um nationalen Erfordernissen zu genügen, ist denkbar.

Eine günstige bzw. gleichmäßige Lichtverteilung nach vorn bzw. zu den Seiten ergibt sich, wenn das Leuchtmittel bzw. die Hauptaustrittsachse des Lichts von dem Leuchtmittel mit der Längsmittelachse des Fahrzeugs einen Winkel von etwa 45° einschließt. Es sind aber auch andere Winkel denkbar; insbesondere dann, wenn mehrere Leuchtmittel verwendet werden.

In einfacher und kostengünstiger Weise können die Leuchtmittel in der Art von Glühlampen ausgebildet sein, welche vorzugsweise einen zumindest im wesentlichen vertikal ausgerichteten Glühfaden aufweisen. Es ist aber auch eine Ausbildung als Glühlampe mit mehreren Glühfäden, eine abweichende Glühfadenausrichtung oder auch eine Ausbildung in der Art einer Gasentladungslampe etc. möglich.

Der Reflektor kann in der Art eines gewöhnlichen Spiegels oder allgemein in der Art einer reflektierenden Fläche ausgebildet sein, die an dem Scheinwerfergehäuse angebracht oder in dieses integriert sein kann, beispielsweise, indem eine solche Fläche aufgeklebt oder auch auf eine Wand aufgedampft wird. Besonders günstig ist eine Ausbildung in der Art einer reflektierenden Mylar-Schicht, die vorzugsweise als ein auf die Wand aufgebrachter Film ausgebildet ist.

Zur Ausrichtung einer größeren Lichtmenge auf ein bestimmtes Zielgebiet, das beispielsweise vor dem Fahrzeug liegt, kann wenigstens einer der Reflektoren einen gekrümmten Bereich aufweisen. Auf diese Weise kann der Fahrweg des Fahrzeugs stärker bzw. intensiver ausgeleuchtet werden als die Fahrzeugumgebung.

Eine Ausleuchtung von etwa 270° um einen Frontbereich des Fahrzeugs kann wünschenswert sein, um den gesamten Arbeitsbereich des Fahrzeugs in optimaler Weise abdecken zu können.

Bei dem Fahrzeug handelt es sich vorzugsweise um ein Arbeitsfahrzeug, da hierbei die Fähigkeit einen um das Fahrzeug herum angeordneten Arbeitsbereich auszuleuchten, besonders wünschenswert ist. Ein solches Arbeitsfahrzeug kann beispielsweise ein landwirtschaftliches Arbeitsgerät, wie beispielsweise ein Traktor, aber auch eine Erntemaschine, ein Baufahrzeug oder ein ähnliches Gerät sein. Insbesondere kann es sich um ein Fahrzeug zur Rasen-, Garten- bzw. Grundstückspflege handeln, an dem ein Anbaugerät vorgesehen ist. Solche Anbaugeräte sind bei solchen Fahrzeugen und insbesondere bei Rasentraktoren bzw. bei Aufsitzmähern unterhalb des Fahrzeugs vorgesehen, so dass durch die vorgeschlagene Beleuchtungseinrichtung auch eine Ausleuchtung des Anbaugeräts bzw. seiner zumindest unmittelbaren Arbeitsumgebung möglich ist. Bei solch einem Anbaugerät kann es sich um eine Kehr- oder auch Räumeinrichtung handeln, vorzugsweise ist es aber als ein Mähwerk insbesondere ein Sichelmähwerk ausgebildet.

In der Zeichnung ist ein nachfolgend näher beschriebenes Ausführungsbeispiel der Erfindung dargestellt. Es zeigt:
- Fig. 1: eine perspektivische Ansicht eines Fahrzeugs zur Rasen-, Garten- bzw. Grundstückspflege mit einer Beleuchtungseinrichtung,
- Fig. 2: eine Ansicht des Fahrzeugs von oben betrachtet, wobei Einzelheiten der Beleuchtungseinrichtung in unterbrochenen Linien dargestellt werden und
- Fig. 3: einen vergrößerten horizontalen Schnitt durch eine Abdeckung des Fahrzeugs, wobei die Beleuchtungseinrichtung aus Fig. 2 genauer dargestellt wird.

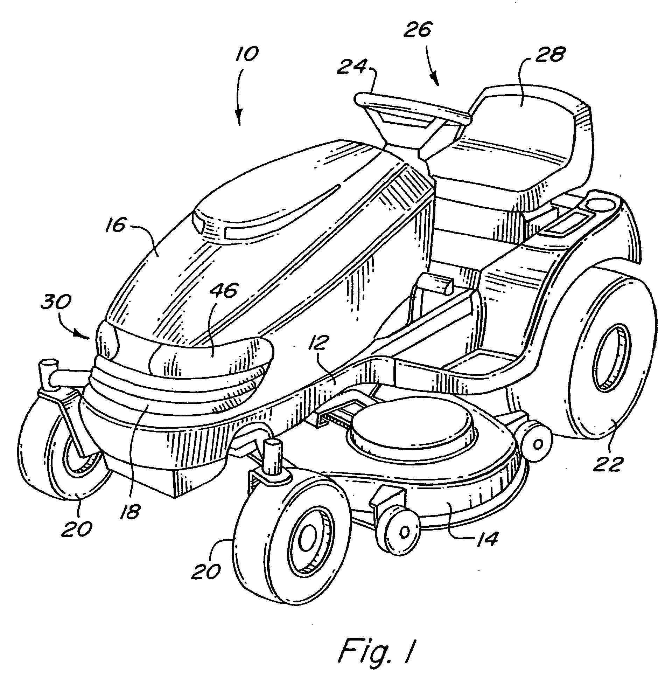

Es wird im folgenden auf die Zeichnung Bezug genommen, in der eine bevorzugte Ausführungsform der vorliegenden Erfindung gezeigt wird. Fig. 1 zeigt ein Fahrzeug 10 zur Rasen-, Garten-bzw. Grundstückspflege mit einem Rahmen 12, unter dem ein Mähwerk 14 angeordnet ist. Eine Kraftquelle oder ein Motor (nicht gezeigt) ist unterhalb einer Haube angeordnet, die als eine einteilige Abdeckung 16 in einem Frontbereich des Fahrzeugs 10 ausgebildet ist. Die Abdeckung 16 weist einen Grill 18 auf, welcher sich quer über eine vordere Endfläche der Abdeckung 16 erstreckt und die Seitenflächen der Abdeckung 16 einhüllt. Der Motor ist wirksam mit dem Mähwerk 14 verbunden, um Mähmesser in dem Mähwerk 14 drehend anzutreiben. Die Mähmesser rotieren in dem Mähwerk 14, um Gras zu schneiden, wenn das Fahrzeug 10 sich über den Untergrund bewegt. Das Fahrzeug 10 weist ein Paar vorderer Freilaufräder 20 auf, die sich auf dem Boden abstützen und schwenken, wenn das Fahrzeug 10 eine Kurve fährt bzw. eine Wendung ausführt. Das Fahrzeug 10 weist ein Paar sich auf dem Boden abstützender Räder 22 auf, die wirksam durch den Motor angetrieben werden, um das Fahrzeug 10 über den Boden zu bewegen. Eine Bedienungsperson kann ein Lenkrad 24 bedienen, um zu bewirken, dass die rückwärtigen Räder 22 mit unterschiedlichen Geschwindigkeiten rotieren, wodurch das Fahrzeug 10 eine Wendung variierenden Grades, einschließlich einer Drehung auf der Stelle ausführen kann, bei der die Räder 22 mit gleicher Geschwindigkeit in unterschiedlichen Richtungen angetrieben werden, so dass sich das Fahrzeug 10 um seine rückwärtige Achse dreht.

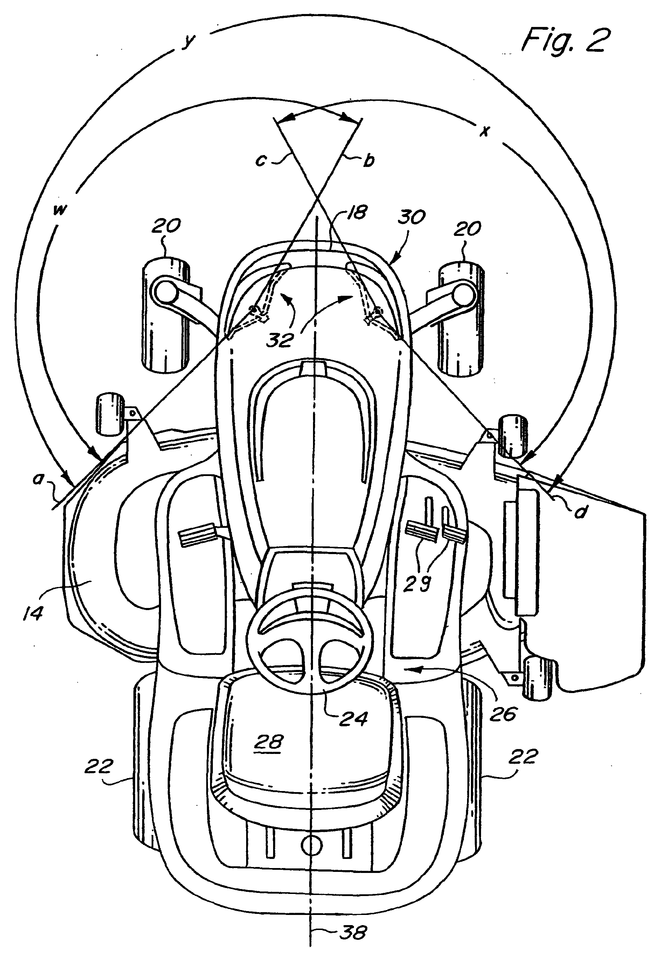

Es ist eine Bedienerplattform 26 vorgesehen, welche einen Sitz 28 aufweist, auf dem eine Bedienungsperson während der Fahrzeugfahrt sitzt. An der Bedienerplattform 26 ist eine Mehrzahl von Steuereinrichtungen vorgesehen, welche durch eine Bedienungsperson betätigt werden können, um den Betrieb des Fahrzeugs 10 zu steuern, welche das Lenkrad 24 umfassen, das durch die Bedienungsperson betätigt werden kann, um zu bewirken, dass das Fahrzeug 10 Wendungen ausführt. Zusätzlich sind Pedale 29 vorgesehen (siehe Fig. 2), welche durch die Bedienungsperson niedergedrückt werden können, um das Fahrzeug 10 nach vorwärts und rückwärts mit variierenden Geschwindigkeiten anzutreiben.

An einem vorderen Bereich des Fahrzeugs 10 ist ein Beleuchtungszusammenbau 30 vorgesehen, welcher ein Scheinwerfergehäuse 32, einen Reflektor 34 und ein Leuchtmittel 36, wie beispielsweise eine Glühlampe, aufweist. Das Scheinwerfergehäuse 32 ist auf beiden Seiten des Grills 18 als ein Bestandteil der Abdeckung 16 ausgebildet. Jedes Scheinwerfergehäuse 32 ist in Richtung der Front und des Hecks des Fahrzeugs 10 offen vorgesehen und weist eine Anschlußfläche 40 auf, von der sich auseinanderstrebende, innere Wände 42, 44 erstrecken. Die seitlich nach außen gewandten Wände 42 jedes Scheinwerfergehäuses 32 erstrecken sich nach vorn und einwärts (in Richtung zu der Längsmittelachse 38 des Fahrzeugs 10) und die seitlich nach innen gerichtete Wand 44 erstreckt sich nach rückwärts und auswärts. An den Öffnungen des Scheinwerfergehäuses 32 sind lichtdurchlässige Abdecklinsen 46 vorgesehen, so dass die Abdecklinsen 46 sich ebenfalls um die Vorderseite des Fahrzeugs 10 zu den Seiten erstrecken. Obwohl die Abdecklinsen 46 mit unterschiedlichen Lichtstreuungseigenschaften vorgesehen werden können, sind die Abdecklinsen 46 nicht entscheidend, um die gewünschte Lichtverteilung in der bevorzugten Ausführungsform zu erzielen. Sie sind jedoch nützlich, um das Leuchtmittel 36 zu schützen.

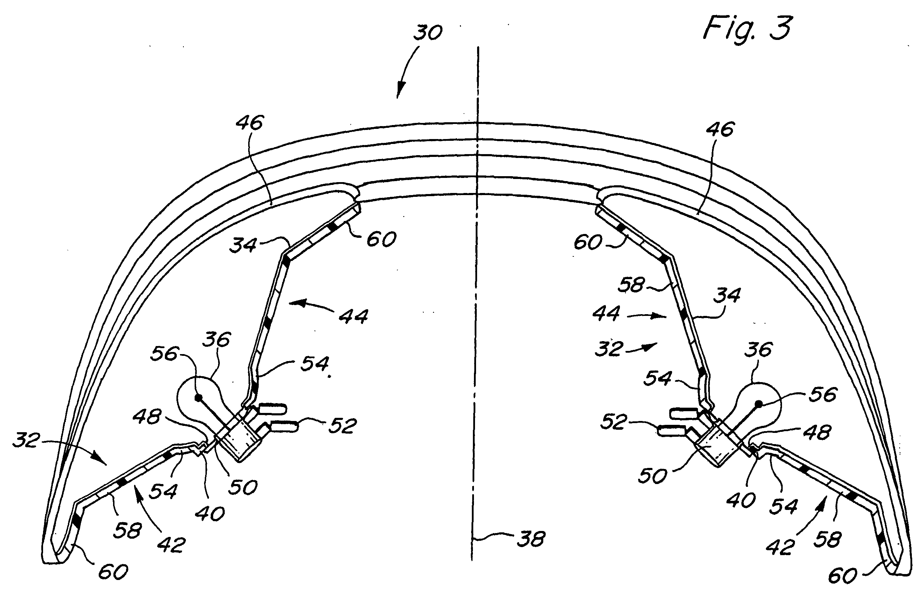

Die Anschlußfläche 40 jedes der Scheinwerfergehäuse 32 wird in Fig. 3 als ein im wesentlichen ebener, vertikaler Bereich des Scheinwerfergehäuses 32 mit einer Aussparung 48 zur Aufnahme einer Leuchtmittelfassung 50 dargestellt. Die Leuchtmittelfassung 50 nimmt das Leuchtmittel 36 auf, so dass das Leuchtmittel 36 vor (mit Bezug dazu von der Mitte entfernt) dem Reflektor 34, zwischen dem Reflektor 34 und der Abdecklinse 46, angeordnet ist. Die Leuchtmittelfassung 50 weist einen Kabelbaum 52 zur Verbindung des Leuchtmittels 36 mit einer Stromquelle und, wenn gewünscht, beispielsweise mit einem AN/AUS-Schalter auf. Die Anschlußfläche 40 ist lotrecht zu einer Linie dargestellt, die einen Winkel von 45° mit der Längsmittelachse 38 des Fahrzeugs 10 einschließt, so dass das Leuchtmittel 36, wenn es angebracht wird, entlang dieser 45°-Linie bewegt wird. Das dargestellte Leuchtmittel 36 weist einen einzigen Glühfaden 56 auf. Obwohl in Fig. 2 ein Leuchtmittel 36 mit einem einzelnen Glühfaden 56 gezeigt wird, wird es dem Fachmann einleuchten, dass viele konventionelle, Licht aussendende Elemente, so auch Leuchtmittel bzw. Glühlampen mit mehreren Glühfäden, Verwendung finden können. Wenn ein Leuchtmittel 36 mit einem einzelnen Glühfaden 56, wie in den Fig. 2 und 3 dargestellt, verwendet wird, ist der Glühfaden 56 vorzugsweise vertikal ausgerichtet (in Fig. 3 in die Zeichnung hinein), um eine optimal ausgerichtete und reflektierte Lichtverteilung zu erzielen, wenn Licht von dem Glühfaden 56 nach außen abgestrahlt wird.

In der bevorzugten Ausführungsform sind die inneren Wände 42, 44 als Bestandteile des Scheinwerfergehäuses 32 integral in den Grill 18 der Abdeckung 16 eingeformt, und der Reflektor 34 bedeckt die inneren Wände 42, 44 jedes der Scheinwerfergehäuse 32 wirksam, um die Verteilung des reflektierten Lichts von dem Leuchtmittel 36 zu bestimmen. Der Reflektor 34 kann in Form einer Schicht bzw. eines Films ausgebildet sein, beispielsweise als reflektierendes Mylar, welche(r) an den Wänden 42, 44 (beispielsweise durch Verkleben) befestigt ist, um eine reflektierende Oberfläche auf den inneren Wänden 42, 44 in Richtung der Außenseite des Scheinwerfergehäuses 32 zu bilden. Alternativ kann der Reflektor 34 aus einem steiferen Material bestehen, so dass die inneren Wände 42, 44 des Scheinwerfergehäuses 32 nur aus dem Reflektor 34 bestehen können und die Geometrie einer inneren Oberfläche des Reflektors 34 entsprechend der Geometrie der hier beschriebenen Wände 42, 44 ausgebildet werden kann. In der dargestellten bevorzugten Ausführungsform wird der Reflektor 34 im wesentlichen die Geometrie der inneren Wände 42, 44 annehmen, an denen er angebracht ist.

Die inneren Wände 42, 44 laufen von der Anschlußfläche 40 aus auseinander und weisen angrenzend an die Anschlußfläche 40 gekrümmte Bereiche 54 auf. Die gekrümmten Bereiche 54 können dazu verwendet werden, eine größere Menge des reflektierten Lichts auf ein Zielgebiet (beispielsweise direkt vor dem Fahrzeug 10) zu richten, als dies durch eine gleichmäßige Lichtverteilung durch den Reflektor 42 erzielt würde. Wenn solche gekrümmten Bereiche 54 verwendet werden, kann es wünschenswert sein, diese Bereiche im Schnitt bzw. in der Draufsicht parabelförmig oder rotationsparabelförmig um den Glühfaden 56 des Leuchtmittels 36 im Brennpunkt auszuführen, so dass von dem Glühfaden 56 ausgehendes Licht von dem bestimmten Bereich der inneren Wände 42, 44 in parallelen Strahlen in Richtung des Zielgebiets weg reflektiert wird. Wenn sie sich weiter von der Anschlußfläche 40 weg erstrecken, gehen die inneren Wände 42, 44 in ebene Bereiche 58 und dann weiter außen in abgewandte bzw. abgebogene Bereiche 60 über, welche beispielsweise verwendet werden können, wenn innerhalb der Abdeckung 16 vorhandener Raum die Fähigkeit erzwingt, einen größeren Streuwinkel entlang der gesamten Erstreckung der inneren Wände 42, 44 zu erzeugen, so dass ein breiter Lichtstrahl zur Verfügung gestellt wird. Zusätzlich liefern die nach außen gewandten Bereiche 60 ein ästhetisch ansprechendes, gedämpftes Licht, wenn die Abdecklinsen 46 sich über den ebenen Bereich 58 hinaus erstrecken, der, wenn er verlängert würde, sich mit den Abdecklinsen 46 überschneiden würde, anstatt eine harte Lichtkante zu bilden, die die Ausdehnung des Scheinwerfergehäuses 32 hinter der Abdecklinse 46 anzeigt.

Aus Fig. 2 kann das Muster des Lichtstrahls entnommen werden, der durch die gezeigte Beleuchtungseinrichtung 30 produziert wird. Der linke Bereich der Anordnung (die linke Frontleuchte) produziert einen Lichtstrahl in einem Winkelbogen w ausgehend von einer Referenzlinie a (eine Linie von dem Glühfaden 56 des Leuchtmittels 36 zu der Längsmittelachse 38 des Fahrzeugs 10, die die direkteste Linie bildet, die ohne Störung durch die innere Wand 44 des Scheinwerfergehäuses 32 erzielt werden kann) zu einer Referenzlinie b (einer Linie von dem Glühfaden 56 des Leuchtmittels 36 zur Seite und zum Heck des Fahrzeugs 10, die die direkteste Linie bildet, die ohne Störung durch die innere Wand 42 des Scheinwerfergehäuses 32 gebildet werden kann). Der rechte Bereich (die rechte Frontleuchte) der Beleuchtungseinrichtung 30 produziert einen Lichtstrahl, welcher ein Spiegelbild des durch den linken Bereich erzeugten Strahls bezogen auf die Längsmittelachse 38 des Fahrzeugs 10 darstellt und welcher sich über einen Winkelbogen x erstreckt, der sich von einer Referenzlinie c (einer Linie von dem Leuchtfaden 56 des Leuchtmittels 36 zu der Längsmittelachse 38 des Fahrzeugs 10, die die direkteste Linie bildet, die ohne Störung durch die innere Wand 44 des Scheinwerfergehäuses 32 gebildet werden kann) zu einer Referenzlinie d (einer Linie von dem Leuchtfaden 56 des Leuchtmittels 36 zur Seite und zum Heck des Fahrzeugs 10, die die direkteste Linie bildet, die ohne Störung durch die innere Wand 42 des Scheinwerfergehäuses 32 erzielt werden kann). Die entsprechenden Strahlen der linken und der rechten Frontleuchte überlappen sich an der Längsmittelachse 38 des Fahrzeugs 10, so dass die Beleuchtungsanordnung 30 einen Bogen um die Front des Fahrzeugs 10 wirksam von der Referenzlinie a zu der Referenzlinie d in einem Winkelbogen y ausleuchtet. In der in Fig. 2 dargestellten Ausführungsform beträgt der Winkel y ungefähr 270°, wodurch Licht um den Frontbereich des Fahrzeugs 10 bis zu vorderen Kanten des Mähwerks 14 zur Verfügung gestellt wird.

Der Fachmann wird ersehen, dass die vorliegende Erfindung in anderen als den beschriebenen Ausführungsformen, welche zum Zwecke der Verdeutlichung und nicht der Begrenzung dargestellt wurden, ausgeführt werden kann und dass die vorliegende Erfindung nur durch die folgenden Ansprüche begrenzt werden soll.

## Patentansprüche

1. Fahrzeug (10) mit einer in einem Frontbereich des Fahrzeugs (10) vorgesehenen Beleuchtungseinrichtung (30) mit zumindest zwei Scheinwerfergehäusen (32), welche bezogen auf eine Längsmittelachse (38) des Fahrzeugs (10) zumindest im wesentlichen gegenüberliegend angeordnet sind und in denen jeweils wenigstens ein Reflektor (34) und ein vor dem Reflektor (34) angeordnetes Leuchtmittel (36) vorgesehen ist, wobei die Reflektoren (34) jeweils wenigstens zwei divergierend angeordnete Wände (42, 44) aufweisen, **dadurch gekennzeichnet, dass** eine Ausleuchtung erzielt wird, die die Längsmittelachse (38) des Fahrzeugs (10) sowie eine zu dieser querverlaufende Linie überschneidet und die sich um mehr als 180° um den Frontbereich des Fahrzeugs (10) erstreckt.

2. Fahrzeug nach Anspruch 1, **gekennzeichnet durch** eine vorzugsweise einen Motor des Fahrzeugs (10) zumindest teilweise umschließende Abdeckung (16), an der die Scheinwerfergehäuse (32) vorzugsweise im Bereich eines Grills (18) vorgesehen bzw. in die sie im Bereich eines Grills (18) eingeformt sind.

3. Fahrzeug nach Anspruch 1 oder 2, **dadurch gekennzeichnet, daß** die Scheinwerfergehäuse (32) zumindest teilweise in Richtung der Frontseite und in Richtung wenigstens eines Seitenbereichs des Fahrzeugs (10) geöffnet bzw. lichtdurchlässig ausgebildet sind.

4. Fahrzeug nach einem oder mehreren der vorherigen Ansprüche, **gekennzeichnet durch** wenigstens eine lichtdurchlässige Abdecklinse (46), wobei das Leuchtmittel zwischen dem Reflektor (34) und der Abdecklinse (46) angeordnet ist.

5. Fahrzeug nach einem oder mehreren der vorherigen Ansprüche, **dadurch gekennzeichnet, dass** die Leuchtmittel (36) mit der Längsachse (38) des Fahrzeugs (10) einen Winkel von etwa 45° einschließen.

6. Fahrzeug nach einem oder mehreren der vorherigen Ansprüche, **dadurch gekennzeichnet, dass** die Leuchtmittel (36) in der Art von Glühlampen ausgebildet sind, welche vorzugsweise zumindest einen zumindest im wesentlichen vertikal ausgerichteten Glühfaden (56) aufweisen.

7. Fahrzeug nach einem oder mehreren der vorherigen Ansprüche, **dadurch gekennzeichnet, dass** die Reflektoren eine reflektierende Mylar-Schicht aufweisen, die vorzugsweise als ein auf eine Wand des Scheinwerfergehäuses (32) aufgebrachter Film ausgebildet ist.

8. Fahrzeug nach einem oder mehreren der vorherigen Ansprüche, **dadurch gekennzeichnet, dass** wenigstens einer der Reflektoren (34) wenigstens einen gekrümmten Bereich (54) zur Ausrichtung einer größeren Lichtmenge auf ein bestimmtes Zielgebiet aufweist.

9. Fahrzeug nach einem oder mehreren der vorherigen Ansprüche, **dadurch gekennzeichnet, dass** eine Ausleuchtung von etwa 270° erzielt wird.

10. Fahrzeug nach einem oder mehreren der vorherigen Ansprüche ausgebildet als ein Fahrzeug zur Rasen-, Garten- bzw. Grundstückspflege mit einem vorzugsweise als ein Mähwerk (14) ausgeführten Anbaugerät, wobei durch die Beleuchtungseinrichtung (30) eine Ausleuchtung erzielt wird, die zumindest im wesentlichen bis an das Anbaugerät heranreicht.
